# EUROPEAN PATENT APPLICATION

(11) **EP 2 857 989 A1**
(43) Date of publication of application: **08.04.2015**
(21) Application number: 13794446.8
(22) Date of filing: 21.05.2013
(51) Int. Cl.: G06F 17/30, G06T 1/00

(54) **IMAGE SEARCH SYSTEM AND IMAGE SEARCH METHOD**

(30) Priority: 24.05.2012 JP 2012118411
(71) Applicant: Panasonic Intellectual Property Management Co., Ltd., Osaka-shi, Osaka 540-6207 (JP)
(72) Inventor: MATSUKAWA, Takayuki, Osaka 540-6207 (JP); YOSHIO, Hiroaki, Osaka 540-6207 (JP); YAMADA, Shin, Osaka 540-6207 (JP); NISHIMURA, Jun, Osaka 540-6207 (JP)
(74) Representative: Eisenführ Speiser
(86) International application number: PCT/JP2013/003233
(87) International publication number: WO 2013/175771

(57) **Abstract**

Provided is an image search system with which, while preserving search precision, it is possible to alleviate transmission volume. A search server (300) acquires from a recorder (200) only low-dimension data which normally has a low data volume. When the density of low-dimension image data within a feature space is greater than or equal to a prescribed threshold value, that is to say, when the number of dimensions for carrying out an inter-image identification with only the low-dimension data is insufficient, the search server (300) acquires from the recorder (200) high-dimension image data for the low-dimension data. Thus, while preserving search precision, it is possible to alleviate data transmission volume of a communication path (130).

## Description

### Technical Field

The present invention relates to an image search system and an image search method, and more particularly, to a system in which a search apparatus such as a search server acquires image data from an image storage apparatus such as a recorder, and searches for an image corresponding to a specific image.

### Background Art

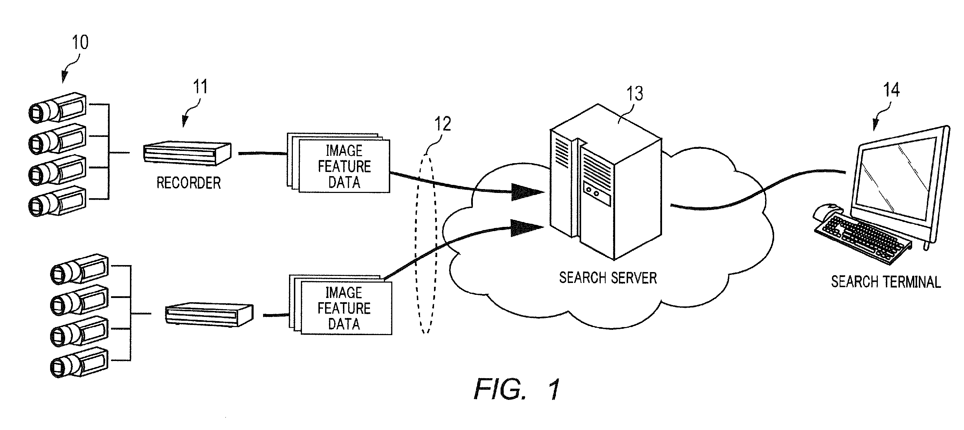

There has been an image search system as illustrated in FIG. 1. In the image search system of FIG. 1, images of a plurality of cameras 10 such as surveillance cameras are stored in recorder 11 serving as an image storage apparatus. Recorder 11 extracts feature data on an image (brightness, frequency information and contour information of the image, and the like) (hereinafter, referred to as image feature data) from the image of camera 10, and transmits the extracted image feature data to search server 13 via communication path 12 such as a network. For example, a face image of a specific person is input to search server 13 from search terminal 14 such as a personal computer as a search query image. Search server 13 checks the image feature data received from recorder 11 against the search query image, and searches for an image corresponding to the search query image.

As a plurality of image feature data sets are aggregated in the search server as described above, it is possible to search for a query image from accumulated moving images stored in the plurality of recorders 11.

Here, as a related art on an image checking and search performed in search server 13, there is a technique disclosed in Patent Literature (hereinafter, abbreviated as PTL) 1, for example. PTL 1 discloses a technique that enables faster checking and efficiently generating an index.

### Citation List

### Patent Literature

### PTL 1

### Japanese Patent Application Laid-Open No. HEI 11-338866

### Summary of Invention

### Technical Problem

Meanwhile, since image data photographed by many cameras 10 is transmitted to search server 13, the volume of transmission data amount is huge. As a result, a transmission cost (line cost) of communication path 12 is likely to increase. For example, when cameras 10 serving as a surveillance camera are arranged in a plurality of branch offices, and a monitoring center accesses search server 13 using search terminal 14 arranged in the monitoring center and monitors moving images of the plurality of branch offices, the line cost of communication path 12 is likely to significantly increase.

Here, when image feature data to be transmitted from recorder 11 to search server 13 is reduced in order to avoid an increase in the line cost of communication path 12, there arises a problem in that the search accuracy of search server 13 deteriorates.

It is an object of the present invention to provide an image search system and an image search method which are capable of avoiding an increase in the amount of transmission while keeping the search accuracy of the system or the method.

### Solution to Problem

An image search system according to an aspect of the present invention includes: an image storage apparatus that stores image data; and a search apparatus that is connected to the image storage apparatus via a communication path, and that searches images stored in the image storage apparatus for an image corresponding to a search query image queried from a search terminal, in which the search apparatus includes: a low-dimensional data acquiring section that acquires a low-dimensional image data set from the image storage apparatus via the communication path, the low-dimensional image data set including a low-dimensional image data set on a first object and a low-dimensional image data set on a second object; a determining section that determines whether or not the low-dimensional image data set on the first object and the low-dimensional image data set on the second object are similar to each other; and a high-dimensional data acquiring section that acquires a high-dimensional image data set on the first object and a high-dimensional image data set on the second object from the image storage apparatus via the communication path when the determining section determines that the low-dimensional image data set on the first object and the low-dimensional image data set on the second object are similar to each other.

An image search method according to an aspect of the present invention is a method in which a search apparatus searches images stored in an image storage apparatus for an image corresponding to a search query image queried from a search terminal, the image storage apparatus being connected to the search apparatus via a communication path, the method including: transmitting a low-dimensional image data set from the image storage apparatus to the search apparatus via the communication path, the low-dimensional image data set including a low-dimensional image data set on a first object and a low-dimensional image data set on a second object; determining whether or not the low-dimensional image data set on the first object and the low-dimensional image data set on the second object are similar to each other; and transmitting a high-dimensional image data set on the first object and a high-dimensional image data set on the second object from the image storage apparatus to the search apparatus via the communication path when the low-dimensional image data set on the first object and the low-dimensional image data set on the second object are determined to be similar to each other.

### Advantageous Effects of Invention

According to the present invention, it is possible to avoid an increase in the amount of transmission while keeping the search accuracy.

### Brief Description of Drawings

FIG. 1 is a diagram illustrating an exemplary configuration of an image search system according to a related art;
FIG. 2 is a diagram illustrating a schematic configuration of an image search system according to an embodiment;
FIG. 3 is a block diagram illustrating a detailed configuration of an image search system;
FIG. 4 is a flowchart illustrating the flow of a process of determining whether or not to acquire feature data;
FIG. 5A is a diagram illustrating an example of data in a low-dimensional space, and FIG. 5B is a diagram illustrating an example of data in a high-dimensional space;
FIG. 6 is a flowchart illustrating the flow of a search process; and
FIG. 7A is a diagram illustrating an exemplary search result of low-dimensional data, and FIG. 7B is a diagram illustrating an exemplary search result sorted again in order of distance of feature data.

### Description of Embodiments

Hereinafter, an exemplary embodiment of the present invention will be described in detail with reference to the appended drawings.

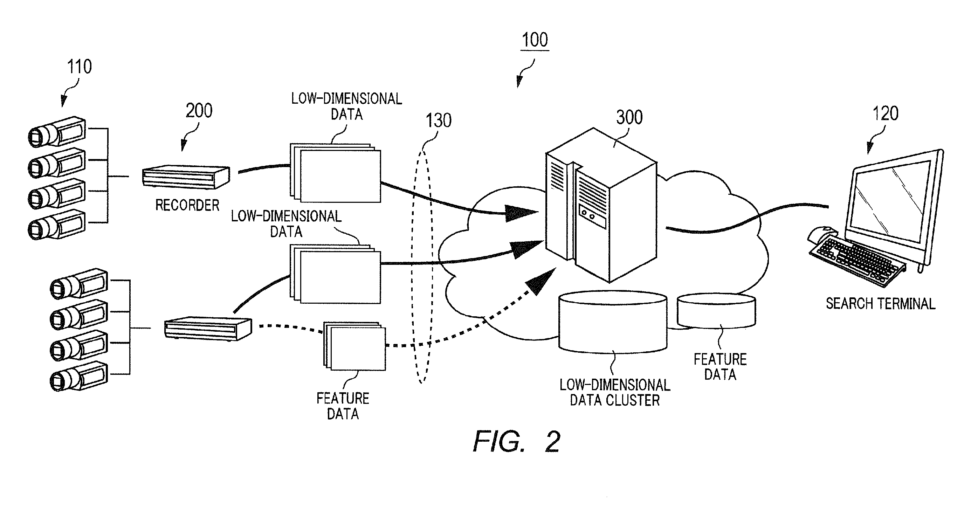

FIG. 2 illustrates a schematic configuration of an image search system according to the present embodiment.

Image search system 100 includes camera 110 serving as an imaging apparatus, recorder 200 serving as an image storage apparatus, search server 300 serving as a search apparatus, and search terminal 120. For example, image search system 100 is a surveillance system in which cameras 110 are arranged in branch offices, and search server 300 and search terminal 120 are arranged in a monitoring center.

The number of cameras 110 is one or more. Commonly, many cameras 110 are connected to recorder 200. Image data photographed by camera 110 is accumulated in recorder 200.

The number of recorders 200 is one or more. Recorder 200 extracts image feature data (hereinafter, referred to simply as "feature data") including, for example, brightness information, frequency information, and contour information of an image from the image data input from camera 110, and accumulates the feature data. Further, recorder 200 extracts low-dimensional image data (hereinafter, referred to simply as "low-dimensional data") that is data lower in dimension than the feature data, and accumulates the low-dimensional data. The low-dimensional data is data obtained by extracting only a main component from the feature data and smaller in the number of dimensions and data volume than the feature data.

Search server 300 is configured to acquire low-dimensional data, which is smaller in data volume, in an ordinary situation and to acquire feature data, which is high-dimensional data, only for targets whose number of dimensions is determined to be insufficient to distinguish between images from each other using only low-dimensional data. Thus, search server 300 can avoid an increase in the amount of data transmission via communication path 130 while keeping the search accuracy by acquiring low-dimensional data, which is smaller in data volume, in an ordinary situation and acquiring minimum feature data when necessary.

In addition, a search query image such as a face image of a person is input from search terminal 120 such as a personal computer to search server 300, for example. Search server 300 checks the search query image against the low-dimensional data or the feature data acquired from recorder 200, searches for an image corresponding to the search query image, and transmits a search result to search terminal 120.

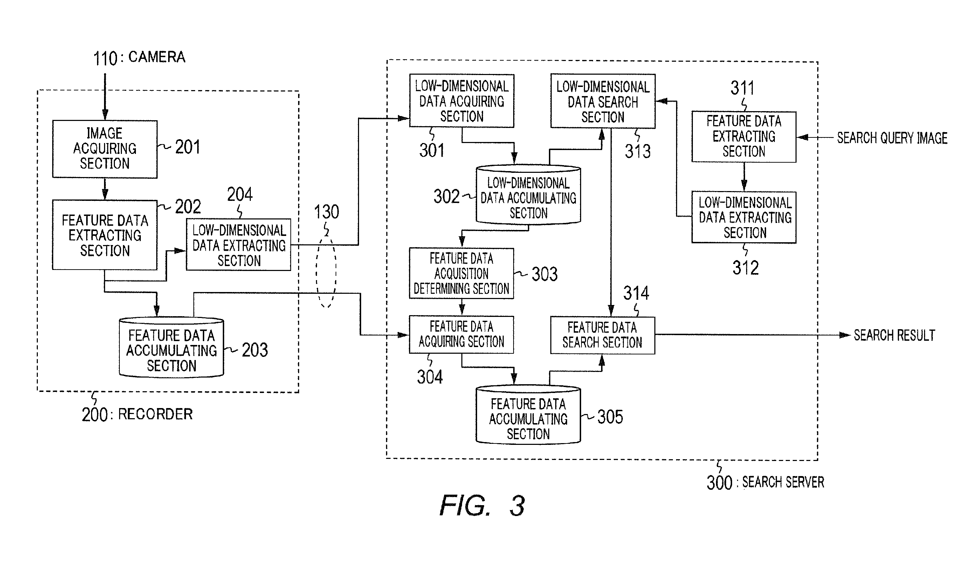

FIG. 3 illustrates a detailed configuration of image search system 100. FIG. 3 illustrates configurations of only recorder 200 and search server 300 in the configuration of the image search system.

First, the configuration of recorder 200 will be described. In recorder 200, feature data extracting section 202 receives image data photographed by camera 110 through image acquiring section 201. Feature data extracting section 202 extracts feature data of a part serving as a search target from an image. For example, feature data extracting section 202 detects a partial region of a face from an image, calculates a filter response value of the Haar-wavelet or the like on a partial image, and uses vector data as feature data. The feature data is accumulated in feature data accumulating section 203.

Low-dimensional data extracting section 204 extracts low-dimensional data lower in the number of dimensions from the feature data extracted by feature data extracting section 202. For example, low-dimensional data extracting section 204 calculates a low-dimensional eigen space based on a plurality of feature data sets through main component analysis in advance, and uses data obtained by projecting the input feature data on the low-dimensional eigen space as low-dimensional data.

Next, the configuration of search server 300 will be described. Search server 300 is broadly divided into a registering system that registers image data and a search system that performs a search. The registering system includes low-dimensional data acquiring section 301, low-dimensional data accumulating section 302, feature data acquisition determining section 303, feature data acquiring section 304, and feature data accumulating section 305. The search system includes feature data extracting section 311, low-dimensional data extracting section 312, low-dimensional data search section 313, and feature data search section 314.

Low-dimensional data acquiring section 301 of the registering system acquires the low-dimensional data extracted by low-dimensional data extracting section 204 via communication path 130 such as a network. In the present embodiment, communication path 130 is a public line such as a network or a telephone line, and is a communication path that requires a connection fee.

Low-dimensional data accumulating section 302 accumulates the low-dimensional data.

Feature data acquisition determining section 303 calculates a target (that is, a data group densely distributed in a feature space) whose separation performance degrades at the time of a search among the low-dimensional data sets accumulated in low-dimensional data accumulating section 302, and determines that it is necessary to acquire feature data (that is, high-dimensional data) of this target. The process of feature data acquisition determining section 303 will be described in detail later.

Feature data acquiring section 304 acquires the feature data that is determined to be acquired by feature data acquisition determining section 303 from feature data accumulating section 203 via communication path 130.

Feature data accumulating section 305 accumulates the feature data acquired by feature data acquiring section 304. In other words, feature data accumulating section 305 accumulates only the feature data that is determined to be necessary by feature data acquisition determining section 303 among the feature data sets accumulated in feature data accumulating section 203 at the recorder 200 side.

Feature data extracting section 311 of the search system extracts feature data on a search target from the search query image input from search terminal 120 (FIG. 2).

Low-dimensional data extracting section 312 extracts low-dimensional data lower in the number of dimensions from the feature data extracted by feature data extracting section 311. The process performed by low-dimensional data extracting section 312 is the same as the process performed by low-dimensional data extracting section 204.

Low-dimensional data search section 313 searches for low-dimensional data similar to the low-dimensional data on the search query image from the low-dimensional data accumulated in low-dimensional data accumulating section 302.

Feature data search section 314 determines similarity on a target having feature data among the low-dimensional data searched by low-dimensional data search section 313 using the feature data again, and outputs a search result to search terminal 120.

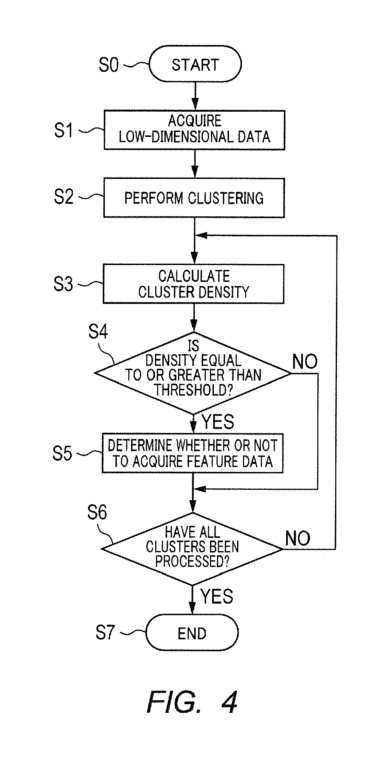

FIG. 4 is a flowchart illustrating the flow of a process performed by feature data acquisition determining section 303.

When a process starts in step S0, in step S1, feature data acquisition determining section 303 acquires low-dimensional data from low-dimensional data accumulating section 302. In step S2, feature data acquisition determining section 303 performs clustering of the low-dimensional data by the k-means technique. The number of clusters is w x N (here, N is the number of all data, and 0 < w < 1). A clustering method is not limited to the k-means technique.

Then, in step S3, feature data acquisition determining section 303 calculates a cluster density. A cluster density D can be obtained by the equation, D = n/v (where, n is the number of data sets in a cluster, and ν is a variance in a cluster).

Then, in step S4, feature data acquisition determining section 303 determines whether or not the density is equal to or greater than a threshold. When the density is determined to be equal to or greater than the threshold, the process proceeds to step S5, and feature data acquisition determining section 303 determines that it is necessary to acquire feature data. However, when the density is determined to be less than the threshold, feature data acquisition determining section 303 proceeds to step S6.

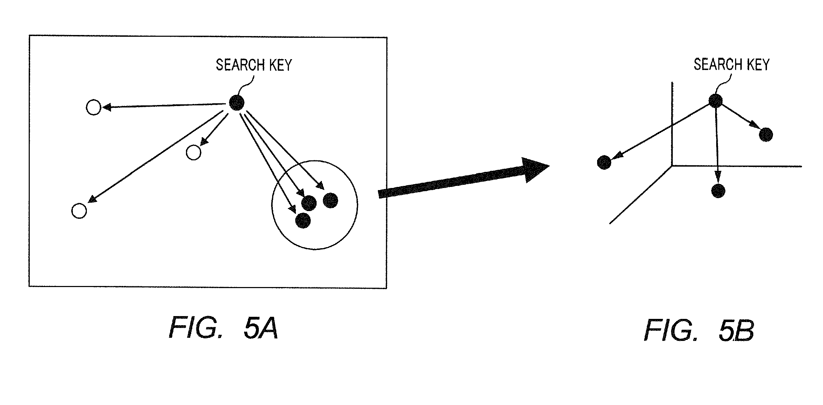

Here, a cluster having a high density illustrated in FIG. 5A is low in separation performance between data. Thus, between data in a cluster having a high density, since a difference in a distance in a feature space from a search key is small, a search error is likely to occur. In this regard, in the present embodiment, when the density is equal to or greater than a threshold, the separation performance between data is improved by acquiring higher-dimensional data, that is, original feature data before low-dimensional data is generated for low-dimensional data included in a corresponding cluster. FIG. 5B illustrates exemplary high-dimensional data. It can be observed that even data that is small in a difference in a distance from a search key (that is, low-dimensional data) in a low-dimensional space illustrated in FIG. 5A is large in a difference in a distance from a search key in a high-dimensional space illustrated in FIG. 5B.

In step S6, feature data acquisition determining section 303 determines whether or not all clusters have been processed, and when a negative result is obtained, the process returns to step S3. In this way, the process of steps S3, S4, (S5), S6, and S3 is repeated until all clusters are processed. Further, when a positive result is obtained in step S6, the process proceeds to step S7, and the determination process ends.

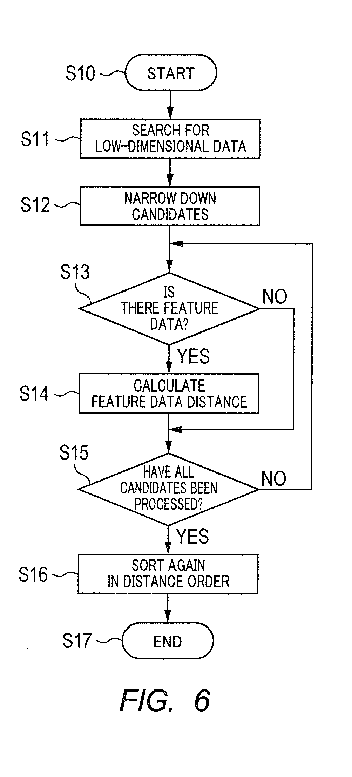

FIG. 6 is a flowchart illustrating the flow of a search process performed by the search system of search server 300.

When a search process starts in step S10, in step S11, search server 300 searches for low-dimensional data similar to a query image input from search terminal 120 in low-dimensional data accumulating section 302 through low-dimensional data search section 313. Specifically, in step S11, low-dimensional data search section 313 calculates distances between the low-dimensional data queried from search terminal 120 and all low-dimensional data accumulated in low-dimensional data accumulating section 302.

Then, in step S12, low-dimensional data search section 313 sorts the low-dimensional data sets in order of distance, and narrows down a designated number of candidates.

Then, in step S13, feature data search section 314 determines whether or not feature data for the candidates is present in feature data accumulating section 305. When feature data is determined to be present, in step S14, the feature data is read from feature data accumulating section 305, and a distance between the queried data and the feature data is calculated.

Then, in step S15, it is determined whether or not all the candidates have been processed, and when a negative result is obtained, the process returns to step S13. In this way, the process of steps S13, (S14), S15, and S13 is repeated until all the candidates are processed. Further, when a positive result is obtained in step S15, the process proceeds to step S16.

In step S16, feature data search section 314 sorts targets belonging to the same cluster again according to a distance from the feature data. Then, in step S17, the search process ends.

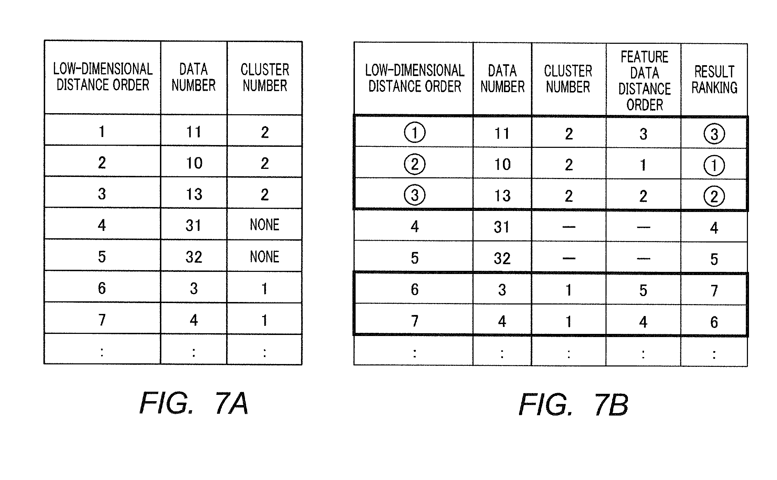

FIG. 7A illustrates an exemplary search result of the low-dimensional data obtained by low-dimensional data search section 313. FIG. 7B illustrates an exemplary search result that is obtained and sorted again in order of distance of the feature data by feature data search section 314.

In FIGS. 7A and 7B, the term "data number" refers to an identification number for identifying a target. In FIG. 7A, the term "none" in a "cluster number" means that there is no feature data (that is, high-dimensional data).

As can be seen from FIG. 7B, when sorting is performed within the same cluster again in order of distance of the feature data, some search results may result in "result ranking" different from that when sorting is performed in order of distance of the low-dimensional data. Thus, it is possible to perform a search with higher accuracy than a search using the low-dimensional data. The "search ranking" is transmitted to search terminal 120 as a search result and displayed on search terminal 120. Further, search server 300 may transmit thumbnail images in order of search ranking as the search result.

As described above, according to the present embodiment, search server 300 acquires low-dimensional data, which is small in data volume, in an ordinarily situation, and acquires feature data on high-dimensional data only for targets whose number of dimensions is determined to be insufficient to distinguish between images from each other using only low-dimensional data. Thus, it is possible to avoid an increase in the amount of data transmission via communication path 130 while keeping the search accuracy.

Further, the above embodiment has been described with the case where an image storage apparatus that stores image data is a recorder, but the image storage apparatus may be a camera.

Further, the functions of the components included in recorder 200 and search server 300 illustrated in FIG. 3 can be implemented by reading and executing a computer program stored in a memory by a central processing unit (CPU).

The disclosure of the specification, drawings, and abstract in Japanese Patent Application No. 2012-118411 filed on May 24, 2012, is incorporated herein by reference in its entirety.

### Industrial Applicability

The present invention has the effect that it is possible to avoid an increase in transmission amount while keeping a search accuracy and is suitably applied to a monitoring system that monitors a specific person, for example.

### Reference Signs List

10, 110 Camera
11, 200 Recorder
12, 130 Communication path
13, 300 Search server
14, 120 Search terminal
202, 311 Feature data extracting section
203, 305 Feature data accumulating section
204, 312 Low-dimensional data extracting section
301 Low-dimensional data acquiring section
302 Low-dimensional data accumulating section
303 Feature data acquisition determining section
304 Feature data acquiring section
313 Low-dimensional data search section
314 Feature data search section

## Claims

1. An image search system, comprising:
an image storage apparatus that stores image data; and
a search apparatus that is connected to the image storage apparatus via a communication path, and that searches images stored in the image storage apparatus for an image corresponding to a search query image queried from a search terminal, wherein
the search apparatus includes:
a low-dimensional data acquiring section that acquires a low-dimensional image data set from the image storage apparatus via the communication path, the low-dimensional image data set including a low-dimensional image data set on a first object and a low-dimensional image data set on a second object;
a determining section that determines whether or not the low-dimensional image data set on the first object and the low-dimensional image data set on the second object are similar to each other; and
a high-dimensional data acquiring section that acquires a high-dimensional image data set on the first object and a high-dimensional image data set on the second object from the image storage apparatus via the communication path when the determining section determines that the low-dimensional image data set on the first object and the low-dimensional image data set on the second object are similar to each other.

2. The image search system according to claim 1, wherein the determining section performs clustering of the low-dimensional image data sets, calculates a density of the low-dimensional image data sets within a same cluster, and determines that the low-dimensional image data sets within the same cluster are similar to each other when the density is equal to or greater than a predetermined threshold.

3. The image search system according to any one of claims 1 and 2, wherein:
similarities of the low-dimensional image data sets to the search query image are sorted based on distances between the low-dimensional image data sets and the search query image in a feature space; and
the low-dimensional image data sets for which the high-dimensional image data sets are present are sorted again based on distances between the high-dimensional image data sets and the search query image in the feature space.

4. An image search method in which a search apparatus searches images stored in an image storage apparatus for an image corresponding to a search query image queried from a search terminal, the image storage apparatus being connected to the search apparatus via a communication path, the method comprising:
transmitting a low-dimensional image data set from the image storage apparatus to the search apparatus via the communication path, the low-dimensional image data set including a low-dimensional image data set on a first object and a low-dimensional image data set on a second object;
determining whether or not the low-dimensional image data set on the first object and the low-dimensional image data set on the second object are similar to each other; and
transmitting a high-dimensional image data set on the first object and a high-dimensional image data set on the second object from the image storage apparatus to the search apparatus via the communication path when the low-dimensional image data set on the first object and the low-dimensional image data set on the second object are determined to be similar to each other.
